# EUROPÄISCHE PATENTSCHRIFT

(11) **EP 0 907 605 B1**
(45) Veröffentlichungstag und Bekanntmachung des Hinweises auf die Patenterteilung: **02.02.2000**
(21) Anmeldenummer: 97925055.2
(22) Anmeldetag: 06.06.1997
(51) Int. Cl.: B66F 9/14

(54) **TELESKOPTISCH ZUR ÜBERNAHME VON LASTEN**
TELESCOPIC PLATFORM FOR RECEIPT OF LOADS
PLATEAU TELESCOPIQUE POUR RECEVOIR DES CHARGES

(30) Priorität: 08.06.1996 DE 19623022
(43) Veröffentlichungstag der Anmeldung: 14.04.1999
(73) Patentinhaber: "AFB" Anlagen- und Filterbau GmbH & Co. KG, D-35708 Haiger-Sechshelden (DE)
(72) Erfinder: LANGER, Heinz, D-57223 Kreuztal (DE)
(74) Vertreter: Grosse, Dietrich, Dipl.-Ing.
(86) Internationale Anmeldenummer: EP9702944
(87) Internationale Veröffentlichungsnummer: WO9747554

(56) Entgegenhaltungen:
- EP-A- 0 410 286
- WO-A-94/04447
- DE-A- 1 781 068
- FR-A- 1 528 823
- FR-A- 2 520 716
- FR-A- 2 709 745
- US-A- 4 003 296
- US-A- 4 388 033
- US-A- 5 460 475

## Beschreibung

Die Erfindung betrifft einen Teleskoptisch mit einer Basis und, auf dieser teleskopartig linear verschiebbar geführten, mindestens zwei Schlitten und einem Aufnahmetisch sowie mindestens zwei auf der Basis angeordneten Antriebsvorrichtungen, deren eine über Antriebsmittel allein mit dem ersten Schlitten verbunden ist, und deren zweite Seile und/oder Kettenzüge betreibt, welche den zweiten bzw. weitere Schlitten sowie den Aufnahmetisch verschieben.

Derartige Teleskoptische werden bspw. bei Hochregallagern zur Beschickung deren Fächer mit Waren und zur Entnahme gestapelter Waren benutzt. Die Länge des eingefahrenen Teleskoptisches ist hierbei durch die Breite des Ganges zwischen den Regalen begrenzt; oft aber werden neben normalen übergroße Ausfahrwege verlangt, wenn bspw. in einem tiefen Regalfach bspw. zwei Paletten hintereinander einzulagern sind, oder besondere Verhältnisse vorliegen, z. B. eine Brandschutzwand vorgesehen ist. Zwar ist es prinzipiell möglich, neben dem optimalen Ausfahren der einzelnen Schlitten und des Aufnahmetisches durch Teilwege derselben auch geringere Ausfahrwege zu bewirken, hierbei stehen jedoch bei üblichen Ausbildungen der Antriebsvorrichtungen der Schlitten und des Aufnahmetisches die Stirnflächen bspw. des Aufnahmetisches und der diesem folgenden zwei Schlitten in so geringem Abstande hintereinander, daß oft die beiden den Aufnahmetisch stützenden Schlitten bei geringeren Ausfahrwegen mit in das Regalfach einzutreten haben und daher bei der Stützhöhe der zu übernehmenden Last die Höhe sowohl des Aufnahmeschiebers als auch der diesen führenden Schlitten zu berücksichtigen sind.

In der EP 0 410 286 A2 wird zur Behebung dieser Nachteile vorgeschlagen, das Ausfahren des Aufnahmetisches und der an diesen anschließenden Schlitten nicht, wie üblich, zeitlich parallel bzw. synchron zu bewirken, sondern durch Riegelvorrichtungen gesteuert nacheinander, so daß bspw. bei geringen Ausfahrwegen des Aufnahmetisches zunächst dieser Aufnahmetisch, sodann der ihn tragende Schlitten usw. bewegt werden, bis der gewünschte Hub erreicht ist. Ungünstig machen sich hierbei der durch die Riegelvorrichtungen benötigte Aufwand ebenso bemerkbar wie der durch das jeweilige Beschleunigen und Verzögern der Teleskopglieder bedingte unruhige Lauf des Aufnahmetisches sowie die durch einen solchen Betrieb begrenzte Ausfahrgeschwindigkeit.

Die PCT-WO 94/04 447 bezieht sich auf Container aufnehmende Traggabeln und offenbart eine weitere Möglichkeit, auch bei geringen Ausfahrwegen der statt eines Aufnahmetisches vorgesehenen Aufnahmegabel deren Abstand zum folgenden Schlitten groß zu halten: Dem auf der Basis geführten Schlitten werden zwei Antriebsvorrichtungen zugeordnet, deren eine die Verschiebung der Schlitten und deren andere die Verschiebung des Aufnahmetisches bzw. der Aufnahmegabel gegen den folgenden Schlitten bestimmen, wobei eine Antriebsvorrichtung über unterschiedliche Übersetzungen aufweisende bzw. schaltbare Getriebe wirksam werden kann. Damit läßt sich zwar der Aufnahmetisch bzw. die Aufnahmegabel stets voll gegen den sie tragenden und führenden Schlitten ausfahren, aber schon die Unterbringung der Antriebsvorrichtungen und deren Energiezuleitungen sowie der diesen nachgeordneten Getriebe in einem Schlitten bietet erhebliche Schwierigkeiten, und auch die Übertragung der Bewegung zum Aufnahmetisch bzw. der Aufnahmegabel über gegebenenfalls weitere Schlitten erweist sich als unliebsam kompliziert und störanfällig.

Die FR-A-2 709 745 offenbart einen Teleskoptisch, der zum Vorschieben von Schlitten sowie des Aufnahmetisches mit zwei, in der Basis untergebrachten Antriebsvorrichtungen ausgestattet ist, die jeweils eine endlose Kette antreiben. Eine dieser Ketten ist mit dem ersten Schlitten, die zweite mit einem weiteren endlosen Band verbunden, das seinerseits wiederum mit einem endlosen Band im folgenden Schlitten verbunden ist. Damit lassen sich zwar Schlitten gesteuert unterschiedlich weit ausschieben, die Verwendung sich quer zu Ketten erstreckender Anker zu deren Verbindung beeinträchtigt jedoch die Genauigkeit der Steuerung sowie die zum Verstellen bewirkbaren Antriebsmomente.

Die Erfindung geht daher von der Aufgabe aus, einen Teleskoptisch der bezeichneten Gattung zu schaffen, bei dem auch bei geringeren Ausfahrwegen zumindest der Aufnahmetisch auf dem ihn führenden Schlitten weitgehend bzw. voll ausgefahren ist, und bei dem die jeweiligen Ausfahrwege bestimmbar sind sowie mit hohen Beschleunigungen durchfahrbar sind. Durch die Unterbringung der Antriebsvorrichtungen sollen die Montage und die Einspeisung des Stromes oder des Hydraulikmittels ebenso erleichtert werden, wie auch die Wartung einfach und gesichert durchführbar wird, so daß im Betriebe sich hohe Standzeiten ergeben.

Gelöst wird diese Aufgabe durch die im Patentanspruch 1 aufgeführten Merkmale. Diese sichern einen relativ einfachen Aufbau, und die jeweiligen Beschleunigungskräfte werden rein durch Kettenzug übertragen, so daß auch größere Kräfte praktisch ohne elastische Dehnung bzw. Nachgiebigkeit übertragbar sind. Damit ist mit den separaten Antriebsvorrichtungen entweder der zweite sowie folgende Schlitten sowie der Aufnahmetisch auszuschieben oder, zur Erzielung größerer Ausschubweiten, zusätzlich der arste Schlitten auf der Basis auszuschieben, so daß für die praktisch benötigten Ausschubweiten stets der Aufnahmetisch, zweckmäßig mit dem zweiten Schlitten, voll ausgefahren sind, während der erste Schlitten nur dann zusätzlich mit ausgefahren wird, wenn die zu erzielende Ausschubweite dies erfordert. Damit aber wird der Aufgabe gemäß die Höhe der bei geringeren Ausfahrwegen in ein Regalfach einfahrenden Teleskopglieder vorteilhaft begrenzt, so daß aufwendige Unterklotzungen eingelagerter Lasten eingespart werden, wobei durch die Anordnung der Antriebsvorrichtungen in der Basis sowohl ausreichend Raum für deren Unterbringung zur Verfügung steht als auch durch Strom- und/oder Druckmittelzuleitungen, die in der Basis stationär verlegbar sind, Komplikationen nicht zu erwarten sind. Die feste Unterbringung in der geräumigen Basis erlaubt nicht nur eine schnelle, einfache und sichere Montage, sondern vereinfacht auch die spätere Wartung, so daß erwünscht lange Standzeiten und ein zuverlässiger, störungsarmer Betrieb zu erwarten sind.

Zweckmäßige, vorteilhafte und erfinderische Weiterbildungen sind in den Unteransprüchen gekennzeichnet.

Im einzelnen sind die Merkmale der Erfindung anhand der Beschreibung eines Ausführungsbeispiels in Verbindung mit dieses erläuternden Zeichnungen dargestellt. Es zeigen hierbei:
- Figur 1: schematisch einen Teleskoptisch in der Ruhestellung,
- Figur 2: den Teleskoptisch der Figur 1 teilweise ausgeschoben,
- Figur 3: den Teleskoptisch der Figur 1 maximal ausgeschoben, und
- Figur 4: schematisch den Aufbau des Teleskoptisches der Figuren 1 bis 3.

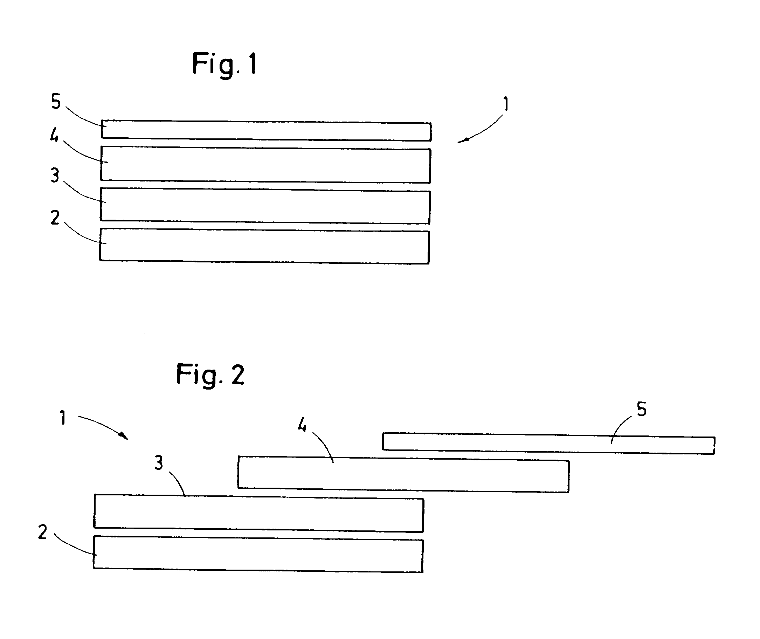

In Figur 1 ist ein Teleskoptisch 1 schematisch in seiner Ausgangsstellung gezeigt, in der über seiner Basis 2 ein erster Schlitten 3, ein zweiter Schlitten 4 und Aufnahmetisch 5 praktisch bündig stehen.

In Figur 2 ist der Teleskoptisch 1 der Figur 1 auf einen Teil des maximalen Ausfahrweges ausgefahren dargestellt, wobei der von einer ersten Antriebsvorrichtung betriebene erste Schlitten 3 noch mit der Basis 2 bündig steht, der zweite Schlitten 4 und der Aufnahmetisch 5 jedoch durch eine zweite Antriebsvorrichtung jeweils voll ausgefahren sind. Damit aber überkragen der Aufnahmetisch 5 und der Schlitten 4 den Schlitten 3 maximal, und die Stirnfläche dieses Schlittens ist gegen die der ausgefahrenen Teleskopglieder maximal zurückgetreten.

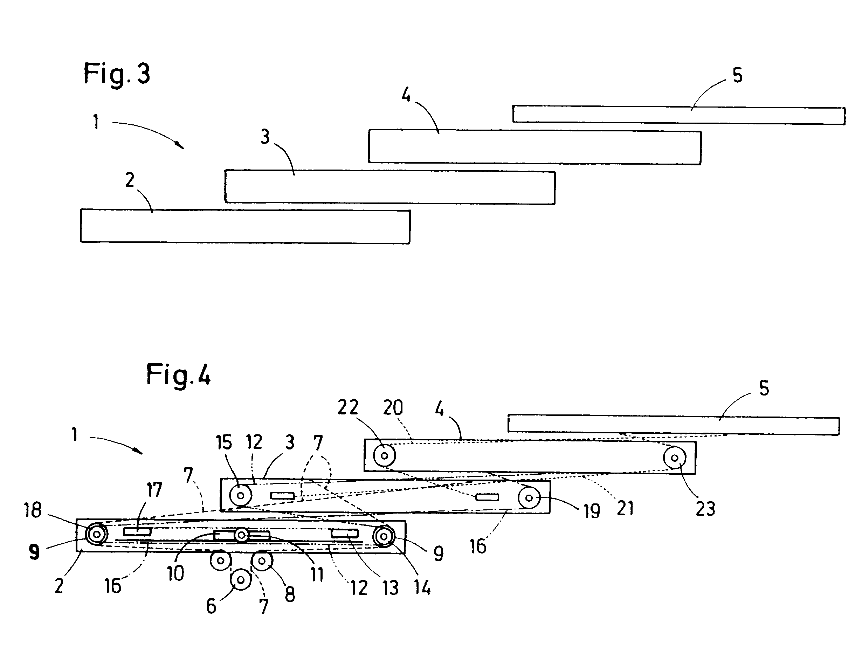

Figur 3 zeigt, daß durch Beaufschlagung der ersten Antriebsvorrichtung nunmehr auch der Schlitten 3 gegen die Basis 2 ausgefahren und somit die maximale Ausfahrlänge des Aufnahmetisches 5 erreicht sind.

Die Figur 4 zeigt wiederum schematisch den Teleskoptisch 1 mit auf der Basis 2 ausgefahrenen Schlitten 3, Schlitten 4 und Aufnahmetisch 5. Zur Bewegung des Schlittens 3 ist ein durch einen nicht dargestellten Antriebsmotor drehbares Ritzel 6 vorgesehen, das in eine Kette 7 eingreift. Diese gestrichelt gezeigte Kette ist um Umlenkritzel 8 und 9 gelegt, und ihre freien Enden sind über Kreuz geführt und an zwei Stellen des Schlittens 3 festgelegt. Wird nunmehr das Ritzel 6 angetrieben, so wird die Kette in der einen zweier möglichen Richtungen bewegt, wobei das eine freie Ende der Kette 7 angezogen wird und das andere nachgibt. Der mit den beiden Enden der Kette verbundene schlitten 3 wird damit entlang seiner Führung in der Basis 2, die zur Erleichterung der Übersicht in Figur 4 nicht dargestellt ist, aus seiner jeweiligen Position linear verschoben.

Die Basis 2 ist aber auch noch mit einer weiteren Antriebsvorrichtung ausgestattet, die ebenfalls nicht dargestellt ist, und die einen Wagen 10 in einer durch horizontale Striche angedeuteten horizontalen Führung innerhalb der Basis 2 zu verschieben vermag. Der Wagen 10 trägt, auf einer Achse drehbar gelagert, ein Doppelritzel 11. Eine mit jeweils drei Punkten strichpunktiert gezeichnete Zugkette 12 ist einendig mit einen Kettenspanner 13 festgelegt, von diesem aus in Richtung auf das Doppelritzel 11 geführt und um etwa 180° um dieses geschlungen. Vom Doppelritzel 11 aus ist die Zugkette 12 um ein weiteres, am Ende der Basis 2 gelagertes Umlenkritzel 14 geführt, von diesem zur gegenüberliegenden Seite des Schlittens 3 über ein an dessen gegenüberliegendem Ende gelagertes Umlenkritzel 15 geschlungen und von diesem aus wiederum zur Gegenseite des Schlittens 4 geführt und mit diesem verbunden. Etwa symmetrisch hierzu ist eine strichpunktiert dargestellte Zugkette 16 an einem Kettenspanner 17 einendig befestigt, über das zweite Ritzel des Doppelritzels 11 geschlungen und von diesem zum Umlenkritzel 18 geführt, das an dem dem Umlenkritzel 14 gegenüberliegenden Ende der Basis 2 gelagert ist. Von hier aus ist die Zugkette 16, die Zugkette 12 kreuzend, zu einem am gegenüberliegenden Ende des Schlittens 3 gelagerten Umlenkritzel 19 geführt, und, die Zugkette 12 nochmals kreuzend, in Endnähe mit dem Schlitten 4 verbunden. Das bedeutet nunmehr folgendes: Wird mittels der nicht dargestellten zweiten Antriebsvorrichtung der Wagen 10 bspw. nach rechts verschoben, so wird die um das Doppelritzel 11 geführte Schlaufe der Zugkette 12 verkürzt und das um die Umlenkritzel 14 und 15 geführte Ende dieser Zugkette verlängert. Gleichzeitig aber wird die von der Zugkette 16 gebildete und um das Doppelritzel 11 gelegte Schlaufe vergrößert, so daß über die Umlenkritzel 18 und 19 eine entsprechende Länge der Zugkette 16 abgezogen und durch ihr freies Ende der Schlitten 4 in seiner Linearführung nach rechts verschoben wird.

Diese Bewegung wird auch dem Aufnahmetisch 5 mitgeteilt: Der Schlitten 3 ist mit dem Aufnahmetisch 5 durch zwei jeweils feingestrichelt dargestellte Zugketten 20 und 21 verbunden, die zunächst gekreuzt und über Umlenkritzel 22 und 23 geführt werden, die an den beiden Enden des Schlittens 4 gelagert sind. Mittels dieser Umlenkritzel 22 und 23 umgelenkt, werden die freien Endbereiche der Zugketten 20, 21 nochmals gekreuzt, und ihre Enden sind mit dem Aufnahmetisch 5 verbunden. Hierdurch werden Bewegungen zwischen den Schlitten 4 und 3 auch auf den Aufnahmetisch 5 in Bezug auf den Schlitten 4 übertragen.

Damit lassen sich durch Verschieben des Wagens 10 mittels der nicht dargestellten zweiten Antriebsvorrichtung und mittels der als Antriebsmittel vorgesehenen Zugketten 12, 16, 20 und 21 der Schlitten 4 auf dem Schlitten 3 sowie der Aufnahmetisch 5 auf dem Schlitten 4 entsprechend der Fig. 2 ausfahren, ohne daß die Lage des Schlittens 3 zur Basis 2 geändert wird. Andererseits läßt sich durch Beaufschlagung der ersten der nicht dargestellten Antriebsvorrichtungen über das als Antriebsmittel dienenden Ritzel 6 sowie Kette 7 die Stellung des Schlittens 3 auf der Basis 2 verändern, wobei vermittels der Zugketten 12, 16, 20 und 21 durch die Verlagerung der Umlenkritzel 15 und 19 auch der Schlitten 4 sowie der Aufnahmetisch 5 ausgeschoben werden. Das bedeutet, daß wahlweise durch Beaufschlagung ausschließlich der zweiten Antriebsvorrichtung Schlitten 4 und Aufnahmetisch 5 ausgefahren werden können, was üblicherweise für einen geringen Ausschubbedarf zur Übernahme von in Regalfächern vorn liegender Lasten ausreicht. Sollen weiter hinten liegende Lasten aufgenommen oder abgegeben werden, so wird statt derer die erste Antriebsvorrichtung beaufschlagt und der Schlitten 3 gegenüber der Basis 2 sowie der Schlitten 4 und die der Aufnahmetisch 5 ausgefahren. Im übrigen sind die Ausfahrmanöver der Teleskopglieder nicht auf das vollständige Ausschieben allein des Schlittens 4 sowie des Aufnahmetisches 5 oder das Ausfahren aller Teleskopglieder beschränkt, es können auch beliebige Zwischenwerte eingestellt werden, wobei vorteilhaft der Schlitten 4 und der Aufnahmetisch 5 voll ausgeschoben werden und der verbleibende Längenbedarf durch Ausschieben des Schlittens 3 abgedeckt wird.

Um die Figuren, aber auch die Beschreibung, nicht zu überlasten, sind viele Einzelheiten weder dargestellt noch direkt beschrieben worden. So sind bspw. der Aufnahmetisch 5 in Führungen des Schlittens 4, dieser in Führungen des Schlittens 3 und dieser wiederum in Führungen der Basis 2 linear verschiebbar, und durch Steuermittel der Antriebe und/oder durch die Bewegungen einschränkende Stopps sind die Ausfahrstrecken der einzelnen Teleskopglieder begrenzt. Vorteilhaft sind auch die Antriebsmittel zur Vermeidung von den linearen Vorschub beeinträchtigenden Momenten doppelt ausgeführt und symmetrisch angeordnet.

Im übrigen sind weder die Antriebsvorrichtungen auf Elektromotore noch die Antriebsmittel auf Zugketten beschränkt. So können als Antriebsvorrichtung Elektromotore, insbesondere Getriebemotore, vorgesehen werden, es sind aber auch Hydraulikmotore, Druckmittelzylinder und andere möglich. Insbesondere beim Antrieb des Schlittens 3 können als Antriebsmittel endlose Ketten in Verbindung mit in diese eingreifenden Mitnehmern verwendet werden, und auch der Antrieb vermittels Zahnstange erweist sich als Vorteilhaft; wobei Zahnstangen durch straff linear gespannte Laschenketten dargestellt sein können. Auch der Antrieb vermittels Zugseilen, Zugbändern und/oder Zuggurten ist möglich. Eine kleine Variante kann auch dadurch gebildet werden, daß die Zugketten 12 und 16 nicht um am wagen 12 gelagerte Doppelritzel geführt werden, sondern direkt mit dem Wagen verbunden sind. Dieser kann durch einen Druckmittelzylinder angetrieben werden, aber auch in Zahnstangen eingreifende Ritzel oder auf angetriebenen Gewindespindeln angeordnete Spindelmuttern können benutzt werden. So ist die Erfindung einer Vielzahl von Varianten fähig, ohne die erfinderischen Grundgedanken zu verlassen.

## Patentansprüche

1. Teleskoptisch mit einer Basis und, auf dieser teleskopartig linear verschiebbar geführten, mindestens zwei Schlitten und einem Aufnahmetisch sowie mindestens zwei auf der Basis angeordneten Antriebsvorrichtungen, deren eine über Antriebsmittel allein mit dem ersten Schlitten verbunden ist, und deren zweite Seile und/oder Kettenzüge betreibt, welche den zweiten bzw. weitere Schlitten sowie den Aufnahmetisch verschieben,
**dadurch gekennzeichnet**,
daß die erste Antriebsvorrichtung eine über Umlenkritzel (8, 9) geführte Kette (7) betreibt, deren beide Enden sich kreuzend jeweils mit den gegenüberliegenden Seiten des ersten Schlittens (3) verbunden sind.

2. Teleskoptisch nach Anspruch 1,
**dadurch gekennzeichnet,**
daß die zweite Antriebsvorrichtung einen in Längsrichtung der Basis (2) verfahrbaren Wagen (10) betreibt, an dem Zugseile, Zugbänder, Zuggurte oder Zugketten (12, 16) befestigt sind, die über beidseitig der Basis (2) angeordnete Umlenkmittel (Umlenkritzel 14, 18) und, gekreuzt geführt, um beidendig des ersten Schlittens (3) vorgesehene Umlenkmittel (Umlenkritzel 15, 19) geschlungen und, nochmals gekreuzt, mit dem zweiten Schlitten (4) verbunden oder über an dessen Enden vorgesehene weitere Umlenkritzel geführt sind.

3. Teleskoptisch nach Anspruch 2,
**dadurch gekennzeichnet,**
daß der Wagen (10) jeweils zwei Umlenkrollen oder -ritzel (Doppelritzel 11) aufweist und die Enden der mit der Basis (2) verbundenen Zugseile oder -ketten (12, 16) in einer 180°-Schleife um diese Rollen bzw. Ritzel gelegt sind.

4. Teleskoptisch nach mindestens einem der Ansprüche 1 bis 3,
**dadurch gekennzeichnet,**
daß die erste Antriebsvorrichtung ein Elektromotor, vorzugsweise ein Getriebemotor, ist.

5. Teleskoptisch nach Anspruch 2 oder 3,
**dadurch gekennzeichnet,**
daß die zweite Antriebsvorrichtung ein eine Gewindespindel antreibender Elektromotor, vorzugsweise ein Getriebemotor, ist, und daß eine auf der Gewindespindel angeordnete Spindelmutter mit dem Wagen (10) verbunden ist.

6. Teleskoptisch nach mindestens einem der Ansprüche 1 bis 3,
**dadurch gekennzeichnet,**
daß die zweite Antriebsvorrichtung einen Elektromotor, vorzugsweise einen Getriebemotor, aufweist, der ein in eine Zahnstange des Wagens (10) eingreifendes Ritzel betreibt.

## Claims

1. Telescopic table with a base and at least two slides and a receiving table guided on the base to be linearly displaceable in telescopic manner as well as at least two drive devices arranged on the base, of which one drive device is connected by way of drive means solely with the first slide and the second drive device operates cable and/or chain pulls which displace the second slide or further slides as well as the receiving table, characterised in that the first drive device operates a chain (7) which is guided around deflecting pinions (8, 9) and the two ends of which are connected in cross-over manner respectively with the oppositely disposed sides of the first slide (3).

2. Telescopic table according to claim 1, characterised in that the second drive device operates a carriage (10) which is movable in the longitudinal direction of the base (2) and to which draw cables, draw bands, draw belts or draw chains (12, 16) are fastened, which are guided, in cross-over manner, around deflecting means (deflecting pinion 14, 18), which are arranged at both sides of the base (2), so as to loop around deflecting means (deflecting pinion 15, 19) provided at both ends of the first slide (3) and, crossing-over once more, are connected with the second slide (4) or guided around further deflecting pinions provided at the ends thereof.

3. Telescopic table according to claim 2, characterised in that the carriage (10) has each time two deflecting rollers or pinions (double pinion 11) and the ends of the draw cables or draw chains (12, 16) connected with the base (2) are laid in a 180° loop around these rollers or pinions.

4. Telescopic table according to at least one of claims 1 to 3, characterised in that the first drive device is an electric motor, preferably a geared motor.

5. Telescopic table according to claim 2 or 3, characterised in that the second drive device is an electric motor, preferably a geared motor, driving a threaded spindle, and that a spindle nut arranged on the threaded spindle is connected with the carriage (10).

6. Telescopic table according to at least one of claims 1 to 3, characterised in that the second drive device comprises an electric motor, preferably a geared motor, which operates a pinion engaging in a rack of the carriage (10).

## Revendications

1. Plateau télescopique comportant une base et au moins deux traîneaux guidés en déplacement linéaire télescopique sur celle-ci, ainsi qu'un plateau de réception et au moins deux dispositifs d'entraînement agencés sur la base dont l'un est relié via des moyens d'entraînement uniquement au premier traîneau et dont l'autre entraîne des câbles et/ou des chaînes qui font déplacer le second traîneau ou d'autres traîneaux ainsi que le plateau de réception, caractérisé en ce que le premier dispositif d'entraînement entraîne une chaîne (7) qui est menée sur des pignons de renvoi (8, 9) et dont les deux extrémités sont reliées en se croisant aux côtés opposés respectifs du premier traîneau (3).

2. Plateau télescopique selon la revendication 1, caractérisé en ce que le second dispositif d'entraînement entraîne un chariot (10) mobile en direction longitudinale de la base (2), sur lequel sont fixés des câbles de traction, des rubans de traction, des sangles de traction ou des chaînes de traction (12, 16) qui sont enlacés sur des organes de renvoi (pignons de renvoi 14, 18), agencés des deux côtés de la base (2), et passés de façon croisée autour d'organes de renvoi (pignons de renvoi 15, 19) prévus aux deux extrémités du premier traîneau (3), et qui sont reliés, à nouveau de façon croisée, au second traîneau (4) ou guidés sur d'autres pignons de renvoi prévus à ses extrémités.

3. Plateau télescopique selon la revendication 2, caractérisé en ce que le chariot (10) comprend deux galets ou pignons de renvoi (pignon double 11), et les extrémités des câbles ou chaînes de traction (12, 16) reliés à la base (2) sont posées sous une boucle de 180° autour de ces galets ou pignons.

4. Plateau télescopique selon l'une au moins des revendications 1 à 3, caractérisé en ce que le premier dispositif d'entraînement est un moteur électrique, de préférence un moto-réducteur.

5. Plateau télescopique selon l'une ou l'autre des revendications 2 et 3, caractérisé en ce que le second dispositif d'entraînement est un moteur électrique, de préférence un moto-réducteur, qui entraîne une broche filetée, et en ce qu'un écrou agencé sur la broche filetée est relié au chariot (10).

6. Plateau télescopique selon l'une au moins des revendications 1 à 3, caractérisé en ce que le second dispositif d'entraînement comprend un moteur électrique, de préférence un moto-réducteur, qui entraîne un pignon s'engageant dans une crémaillère du chariot (10).
